# FASCICULE DE BREVET EUROPEEN

(11) **EP 3 897 120 B1**
(45) Date de publication et mention de la délivrance du brevet: **14.08.2024**
(21) Numéro de dépôt: 19845771.5
(22) Date de dépôt: 17.12.2019
(51) Int. Cl.: A01K 87/00, A01K 87/02

(54) **CANNE A PECHE TELESCOPIQUE À FIL INTERIEUR**
TELESKOPISCHE ANGELRUTE MIT INNERER SCHNURFÜHRUNG
INTERNAL LINE TELESCOPIC FISHING ROD

(30) Priorité: 18.12.2018 FR 1873231
(43) Date de publication de la demande: 27.10.2021
(73) Titulaire: CTFI, 64210 Bidart (FR)
(72) Inventeur: DUPUY, Jean-François, 64500 Saint Jean de Luz (FR)
(74) Mandataire: Fédit-Loriot
(86) Numéro de dépôt international: PCT/FR2019/053124
(87) Numéro de publication internationale: WO 2020/128306

(56) Documents cités:
- EP-A1- 0 102 873
- EP-A1- 0 711 499
- FR-A1- 2 539 582

## Description

L'invention se rapporte au domaine de la pêche, en particulier au moyen d'une canne à pêche télescopique, notamment avec fil intérieur.

Traditionnellement, les cannes à pêches télescopiques sont munies d'anneaux extérieurs pour recevoir et guider le fil.

Le brevet FR2666721 décrit une canne à pêche télescopique, avec des brins tronconiques téléscopables les uns dans les autres et des éléments de guidage de fil mobiles, de diamètres croissants reçus dans certains des brins. Ces éléments de guidage de fil mobiles coopèrent entre eux lorsque les brins sont rétractés les uns dans les autres, de sorte que lorsque un utilisateur déploie la canne à pèche, les éléments de guidage de fil mobiles sont entrainés en mouvement et viennent se gripper les uns après les autres dans les brins.

Dans la présente demande, par convention, on parlera parfois abusivement de « diamètre de brin » pour désigner une plage de dimensions de la section (circulaire ou non) du brin. Par exemple, un brin A peut être dit de plus grand diamètre par rapport à un brin B si les sections du brin A et les sections du brin B ont des dimensions dans des plages de valeurs telles que le brin A peut recevoir le brin B, sur au moins 30% de sa longueur, et avantageusement sur plus de 70% de sa longueur.

Il est avantageux en termes de confort utilisateur et de compacité du dispositif de procéder à une insertion de fil latérale, via un passage s'étendant suivant une direction ayant une composante radiale, tout en permettant au brin définissant ce passage de recevoir les autres brins. Le document EP 0 711 499 décrit une telle canne.

Il existe néanmoins un besoin pour une canne à pêche télescopique fil intérieur, à insertion de fil latérale et à brins rétractables dans le brin définissant le passage d'entrée de fil qui permettrait une insertion du fil plus facile.

Il est proposé selon l'invention une canne à pêche comprenant, conformément à la revendication indépendante 1, un ensemble d'au moins trois brins (avantageusement tronconiques) téléscopables les uns dans les autres, ledit ensemble comprenant un premier brin, dit brin N0, un dernier brin, dit scion, et un sous-ensemble de brin(s) intermédiaire(s) entre le premier brin et le scion, ledit sous-ensemble comprenant au moins un brin intermédiaire, le brin intermédiaire de plus grand diamètre parmi ledit au moins un brin intermédiaire dudit sous-ensemble, dit (N0+1), étant susceptible d'être reçu dans le brin N0, et le brin intermédiaire de plus petit diamètre parmi ledit au moins un brin intermédiaire dudit sous-ensemble étant susceptible de recevoir le scion.

Le premier brin définit sur sa périphérie un passage d'entrée de fil s'étendant suivant une direction ayant une composante radiale.

La canne est agencée pour pouvoir passer d'une position complètement rétractée, dans laquelle tous les brins dudit ensemble sont téléscopés les uns dans les autres, à une position déployée, dans laquelle tous les brins dudit ensemble sont déployés les uns par rapport aux autres, et pour pouvoir adopter en outre une position semi-rétractée, dite position d'entrée de fil, dans laquelle le brin (NO+i), i étant supérieur ou égal à 1, est déployé par rapport au brin N0 et dans laquelle le scion est reçu dans le brin (N0+i).

En position semi-rétractée, les brins N0,..., N0+i sont déployés les uns par rapport aux autres, et les brins N0+i+1,...,jusqu'au scion soient téléscopés dans le brin N0+i.

On peut prévoir un ou plusieurs brins entre le brin N0 et le brin (N0+i), c'est-à-dire que i=2, 3 ou davantage.

Alternativement, i=1, c'est-à-dire que le brin (N0+1) reçoit tous les autres brins de plus petits diamètres en position semi-rétractée.

La canne comprend en outre
- des premiers moyens de rétention pour, en position semi-rétractée, lorsque le scion est poussé vers le brin N0, par exemple avec une force de moins de 10 N, venir en butée contre le scion de façon à retenir le scion relativement au brin (NO+i) et l'empêcher d'atteindre le passage d'entrée de fil, et
- des deuxièmes moyens de rétention pour retenir le scion dans la position semi-rétractée, lorsque soumis à des efforts de moins de 10 N tendant à l'éloigner du brin N0, à un emplacement correspondant à une mise en butée contre les premiers moyens de rétention ou à moins de 30 centimètres, avantageusement à moins de 20 centièmes, avantageusement à moins de 10 centimètres (ou alternativement à moins de 30%, avantageusement moins de 20%, avantageusement moins de 10%, de la longueur du brin N0+1) d'une position de mise en butée contre les premiers moyens de rétention.

On entend par là que :
- les premiers moyens de rétention peuvent par exemple être agencés pour en position semi-rétractée, venir en butée contre le scion de façon à retenir le scion relativement au brin (NO+i) et l'empêcher d'atteindre le passage d'entrée de fil, tant que le scion est soumis à des forces tendant à le pousser vers le brin N0 inférieures 10 N ; en particulier, cette rétention peut avoir lieu lorsque cette force est inférieure à une valeur limite; cette première valeur limite peut être de 10 N ou davantage, par exemple de 15 N ou 20 N ; on peut prévoir que le scion atteigne le passage d'entrée de fil pour une force supérieure à cette valeur limite ; et que
- les deuxièmes moyens de rétention sont agencés de façon à retenir le scion dans la position semi-rétractée - à un emplacement correspondant à une mise en butée contre les premiers moyens de rétention ou à moins de 30 centimètres, avantageusement à moins de 20 centièmes, avantageusement à moins de 10 centimètres (ou alternativement à moins de 30%, avantageusement moins de 20%, avantageusement moins de 10%, de la longueur du brin N0+1) d'une position de mise en butée contre les premiers moyens de rétention) - tant que le scion est soumis à une force tendant à l'éloigner du brin N0 inférieure à 10 N. En particulier, cette rétention peut avoir lieu lorsque cette force est inférieure à une deuxième valeur limite et le scion peut ne plus être retenu lorsque cette force dépasse cette deuxième valeur limite. Cette deuxième valeur limite peut être de 10 N ou davantage, par exemple de 15 N, 20 N ou 30 N.

L'invention n'est pas limitée à une forme particulière des premiers moyens de rétention.

Les premiers moyens de rétention peuvent par exemple comprendre :
- un élément de guide de fil fixé à l'extrémité de plus large diamètre du brin (NO+i), cet élément définissant un passage pour le fil, ce passage étant délimité par des rebords suffisamment étendus pour venir en butée contre le scion ou un élément solidarisé au scion lorsque le scion est poussé vers le brin N0 ;
- un bourrelet à l'extrémité la plus fine du scion qui vient en butée contre l'extrémité d'au moins un autre brin lorsque le scion est soumis à des efforts tendant à l'approcher du brin N0 et retient le scion suspendu, comme dans le document EP 0 711 499 ; et/ou
- autre.

Les deuxièmes moyens de rétention permettent d'empêcher ou de limiter les déplacements inverses, notamment lorsque la canne est placée à la verticale avec son extrémité de plus fin diamètre plus basse que son extrémité de plus grand diamètre.

Les mouvements possibles du scion en position semi-rétractée peuvent ainsi être limités à une plage de par exemple 30, 20 ou 10 cm, de sorte qu'on peut concevoir une canne telle qu'en position semi-rétractée le fil soit mieux guidé vers l'entrée de plus grand diamètre du scion. L'insertion de fil peut ainsi être grandement facilitée.

La canne à pêche comprend en outre :
- pour au moins un brin intermédiaire, cet au moins un brin étant tronconique, un jeu d'au moins deux éléments de guidage de fil mobiles J dans ledit brin intermédiaire, chaque élément dudit jeu ayant un diamètre externe compris dans la plage de diamètres internes dudit brin intermédiaire et définissant un passage pour le fil.

L'invention n'est bien entendu pas limitée à une forme de passage particulière. On pourra prévoir des alésages cylindriques, avec par exemple une base circulaire ou carrée, ou bien encore des alésages avec une section variable, par exemple de façon à guider le fil.

Dans un mode de réalisation, chaque brin intermédiaire du sous-ensemble de brin(s) intermédiaire(s) reçoit un jeu d'au moins un élément de guidage de fil mobile.

Dans un autre mode de réalisation, au moins un brin intermédiaire du sous-ensemble de brins intermédiaires est dénué d'éléments de guidage de fil mobile.

Par exemple, le brin intermédiaire précédent immédiatement le scion peut être dénué d'éléments de guidage de fil mobile, notamment dans le cas d'une canne à pêche destinée à la pêche en mer. Ce brin dénué d'éléments de guidage de fil mobiles peut par exemple être plus court que les autres brins. La canne peut ainsi être conçue plus robuste.

Par exemple, le brin (N0+1) peut être dénué d'élément de guidage de fil mobile.

Dans un autre mode de réalisation, non conforme à l'invention, la canne peut être dénuée d'éléments de guidage de fil mobiles. Dans ce cas, on pourra par exemple prévoir un dispositif de bouchon adéquat et/ou que les extrémités des brins (ou des éléments solidarisés aux extrémités des brins) de plus grand diamètre s'emboitent les unes dans les autres à l'état semi-rétracté, retenant ainsi de scion dans un sens et dans l'autre.

Dans un mode de réalisation, le premier brin peut être précédé d'un ou plusieurs autre brins.

Par exemple, une bobine de fil peut être montée sur un brin précédent le brin N0.

Avantageusement, la canne peut être agencée de sorte que la position de ces un ou plusieurs autres brins puisse être ajustée par rapport au brin N0.

Avantageusement, on pourra alors prévoir des joints élastiques annulaires entre le brin N0 et le brin immédiatement précédent, et le cas échéant entre brins précédents le brin N0, permettant ainsi un réglage de la position de ce ou ces brin(s) précédent le brin N0.

Alternativement, l'extrémité de plus grand diamètre du premier brin correspond à une extrémité de la canne à pêche.

Avantageusement et de façon non limitative, les premiers moyens de rétention peuvent être agencés pour, en position semi-rétractée, retenir en outre ledit au moins un jeu d'au moins un élément de guidage de fil mobile de façon à l'empêcher d'atteindre le passage d'entrée de fil lorsque le scion est poussé vers le brin N0.

Ainsi, en position semi-retractée, lorsque le scion est poussé vers le premier brin, des éléments de la canne viennent en butée les uns contre les autres, empêchant ainsi le(s) brin(s) de plus petites sections que celles du brin (NO+i) de passer au travers de ce brin (NO+i) et d'être reçus dans le brin N0.

Avantageusement et de façon non limitative, la canne peut être agencée pour qu'en position semi-rétractée, par exemple lorsque le scion est soumis à des efforts de moins de 10 N tendant à l'éloigner du premier brin, au moins un (et de préférence chaque) élément de guidage de fil mobile soit à moins de 5 cm d'un autre élément de guidage de fil mobile ou d'une entrée de brin, avantageusement à moins de 2 cm, avantageusement à moins de 1 cm. On pourra en particulier jouer sur les longueurs des brins et des éléments de guidage de fil mobile.

Avantageusement et de façon non limitative, la canne peut être agencée pour qu'en position semi-rétractée, par exemple lorsque le scion est soumis à des efforts de moins de 10 N tendant à l'éloigner du premier brin, pour au moins un brin intermédiaire recevant un jeu d'éléments de guidage de fil mobiles, l'élément de guidage de fil mobile de plus grand diamètre dudit jeu soit solidarisé de façon amovible audit brin intermédiaire. Ainsi le jeu d'éléments de guidage de fil mobiles reçu dans ce brin intermédiaire est contre le brin suivant. Le passage du fil est alors particulièrement aisé puisque les passages définis dans ces éléments de guidage mobiles et des entrées de brin sont directement dans la continuité les uns des autres, formant un court tunnel.

Avantageusement et de façon non limitative, la canne peut être agencée pour qu'en position semi-rétractée, par exemple lorsque le scion est soumis à des efforts de moins de 10 N tendant à l'éloigner du premier brin, pour au moins un brin intermédiaire, l'élément de guidage de fil mobile de plus petit diamètre reçu dans ce brin intermédiaire est solidarisé (de façon amovible ou non) au brin suivant.

Par exemple, un brin intermédiaire tronconique peut recevoir un seul élément de guidage de fil mobile. Cet élément peut avantageusement se solidariser, par exemple de façon amovible, au brin suivant lorsque la canne est à l'état semi-rétracté, et avantageusement aussi au brin intermédiaire lui-même, par exemple via un élément d'entrée fixé à l'entrée de plus grand diamètre du brin intermédiaire. Lorsque la canne est déployée, la solidarisation à cet élément d'entrée se défait, et l'élément mobile est entrainé par le brin suivant jusqu'à une position de grippage contre les parois internes du brin, ce grippage rompant la solidarisation au brin suivant.

Selon l'invention, pour au moins un brin intermédiaire, le jeu d'éléments de guidage de fil mobiles reçu dans ledit brin intermédiaire comprend au moins deux éléments de guidage de fil mobiles.

Dans ce cas, la canne est agencée pour qu'en position semi-rétractée, par exemple lorsque le scion est soumis à des efforts de moins de 10 N tendant à l'éloigner du premier brin, pour au moins un brin intermédiaire, tous les éléments de guidage de fil mobiles reçus dans ledit brin intermédiaire sont solidarisés de façon amovible les uns aux autres.

Ainsi, lors du repliement depuis la position déployée, un brin (N1+1) voit les éléments de guidage mobiles reçus dans le brin N1 se solidariser les uns après les autres à son extrémité. L'introduction du fil depuis l'élément de guidage de fil mobile de plus grand diamètre parmi ceux reçus dans le brin N1 vers le brin (N1+1) est alors relativement aisé, les passages des éléments de guidage formant un tunnel.

Avantageusement, la canne peut être agencée de sorte que ces solidarisations amovibles résistent à un effort de moins de 10 N, c'est-à-dire tant que les forces exercées tendant à défaire ces solidarisations sont inférieures à 10 N.

Avantageusement et de façon non limitative, la canne peut être agencée pour qu'en position semi-rétractée, le scion étant par exemple soumis à des efforts de moins de 10 N tendant à l'éloigner du premier brin, pour au moins un brin intermédiaire, l'élément de guidage de fil mobile de plus grand diamètre parmi ceux reçu(s) dans ledit brin intermédiaire est solidarisé de façon amovible audit brin intermédiaire, par exemple via un élément de guidage de fil fixe, solidarisé (par exemple vissé ou grippé) ou d'une seule pièce avec l'entrée de plus grand diamètre de ce brin intermédiaire.

Si l'élément de guidage de fil mobile de plus petit diamètre parmi ceux reçu(s) dans ce brin intermédiaire est par ailleurs solidarisé au brin suivant, alors en position semi-rétractée, le brin intermédiaire et le brin suivant sont maintenus ensembles par ces solidarisations via les éléments de guidage de fil.

S'il y a plusieurs éléments de guidage de fil mobiles dans le brin intermédiaire, ils peuvent être solidarisés entre eux.

Les deuxièmes moyens de rétention peuvent ainsi être intégrés au(x) élément(s) de guidage de fil mobile(s) et aux brins, car ces solidarisations réversibles permettent de maintenir ensemble les brins intermédiaires adjacents recevant des éléments de guidage de fil mobile.

Lorsque tous les brins intermédiaires reçoivent un ou des éléments de fil mobile, ces solidarisations permettent de maintenir ensemble tous les brins depuis le brin (NO+i) jusqu'au scion.

Ainsi, avantageusement, les deuxièmes moyens de rétention peuvent comprendre ledit au moins un jeu d'au moins deux éléments de guidage de fil mobiles.

Dans le cas de brins intermédiaires dénués d'élément de guidage de fil mobile, les deuxièmes moyens de rétention peuvent en outre comprendre des moyens de coopération entre chaque brin intermédiaire dénué d'élément de guidage de fil mobile et le suivant ou le scion.

Avantageusement et de façon non limitative, la canne peut être agencée de sorte, et notamment le scion peut être choisi avec une longueur telle, qu'en position semi-rétractée et soumis à des efforts de moins de 10 N tendant à l'éloigner du brin N0, son extrémité libre forme une saillie (s'étend au-delà) par rapport à/aux extrémité(s) de plus petit diamètre du (des) brin(s) intermédiaire(s), facilitant ainsi sa prise en main pour le passage vers la position déployée d'utilisation de la canne.

Lorsque le sous-ensemble de brin intermédiaire comprend plusieurs brins intermédiaires recevant des éléments de guidage de fil mobiles, cette pluralité de jeux d'éléments de guidage de fil peut former un tunnel allant par exemple du scion (ou d'un brin intermédiaire précédent le scion et dénué l'éléments de guidage de fil mobile) jusqu'à l'entrée de plus grand diamètre du brin intermédiaire le plus proche du premier brin, à l'élément de guidage de fil mobile de plus grand diamètre, ou autre.

Dans un mode de réalisation, les deuxièmes moyens de rétention peuvent comprendre un dispositif de bouchon destiné à l'extrémité libre du scion et agencé pour maintenir ensemble le scion et les brins jusqu'au brin (NO+i), indépendamment du premier brin (c'est-à-dire que le dispositif de bouchon n'empêche pas les brins (NO+i),..., le scion, ainsi maintenus ensemble d'être ensemble entrainés en mouvement par rapport au brin N0). Ce dispositif de bouchon peut ainsi empêcher le scion de se déployer par rapport au brin précédent, et le cas échéant, aux brins intermédiaires de se déployer les uns par rapport aux autres.

Ce dispositif de bouchon peut par exemple comprendre un fond destiné à venir en regard des extrémités de plus petits diamètre du scion et du ou des brin(s) intermédiaire(s) concerné(s) et une paroi périphérique, avantageusement souple, destinée à venir en contact avec la surface interne ou externe d'un tronçon d'extrémité du brin intermédiaire (NO+i).

Avantageusement, le dispositif de bouchon peut être agencé pour pouvoir en outre maintenir ensemble le scion, le sous-ensemble de brin(s) intermédiaire(s) et le premier brin lorsque la canne à pêche est en position rétractée.

Ainsi, on utilise un même dispositif de bouchon en position rétractée et en position d'insertion de fil, semi-rétractée, pour empêcher le déploiement de la canne.

L'invention n'est en rien limitée à des deuxièmes moyens de rétention comprenant des moyens de solidarisation du brin (NO+i) au scion via un ou plusieurs éléments de guidage de fil mobile. Par exemple, dans le cas de deuxièmes moyens de rétention comprenant seulement un bouchon, la canne peut être agencée pour que l'élément de guidage de fil mobile de plus grand diamètre soit sans solidarisation directe avec le brin intermédiaire dans lequel il est reçu. Ainsi lorsque le bouchon est retiré et la canne renversée, le brin suivant ce brin (NO+i), par exemple le scion dans le cas d'une canne trois brins, sort, facilitant ainsi sa prise en main par l'utilisateur pour le passage en position déployée.

Des modes de réalisation préférés de l'invention comportent les caractéristiques additionnelles de l'une des revendications dépendantes 2 à 7.

Dans un mode de réalisation, le dispositif de bouchon peut comprendre :
- un fond (plein ou non) dimensionné pour recouvrir les ouvertures des brins (NO+i) jusqu'au scion,
- une première paroi périphérique, avantageusement souple, formant saillie depuis le fond et dimensionnée pour venir en contact avec la surface interne ou externe d'un tronçon d'extrémité du brin (NO+i), et
- une deuxième paroi périphérique, avantageusement souple, de plus grand diamètre que la première paroi périphérique et dimensionnée pour venir en contact avec la surface interne ou externe d'un tronçon d'extrémité du brin N0.

La première et la deuxième paroi peuvent être concentriques.

La deuxième paroi peut s'étendre depuis le fond, ou non. Par exemple, on pourrait prévoir un décrochement depuis la première paroi.

Avantageusement et de façon non limitative, la première paroi peut s'étendre depuis le fond sur une longueur supérieure à celle de la deuxième paroi, ce qui peut faciliter le passage de la position complètement rétractée à la position semi-rétractée.

Avantageusement et de façon non limitative, le dispositif de bouchon peut comprendre deux éléments de bouchons mobiles l'un par rapport à l'autre en rotation autour de l'axe longitudinal de la canne lorsque le dispositif de bouchon est installé à l'extrémité de sortie de fil, chaque élément de bouchon définissant un orifice traversant pour le passage du fil.

Le dispositif de bouchon est agencé pour que les éléments de bouchons puissent être disposés selon une première configuration, dans laquelle lesdits orifices se recouvrent au moins en partie afin que le fil puisse être rembobiné ou tiré, et également suivant une deuxième configuration dans laquelle les positions respectives des deux orifices sont différentes.

Dans un mode de réalisation, dans la deuxième configuration, le recouvrement des orifices est suffisamment faible pour empêcher le mouvement du fil suivant sa direction linéaire propre (rembobinage par exemple). On peut ainsi d'un simple mouvement de rotation bloquer le fil.

Dans un mode de réalisation, chacun des deux orifices s'étend jusqu'à un bord d'extrémité de l'élément de bouchon correspondant. On peut alors prévoir que dans une configuration, le recouvrement des orifices s'étend jusqu'aux bords de ces éléments, de sorte que le bouchon puisse être retiré des brins (ou installé) malgré la présence du fil, par un simplement mouvement latéral.

Alternativement, on pourrait prévoir des orifices oblongs, n'atteignant pas les bords, de sorte que par rotation relative d'un élément par rapport à l'autre, on passe simplement d'une configuration autorisant le mouvement du fil (notamment lorsque l'utilisateur rembobine le fil) et à une configuration dans laquelle le fil est bloqué.

En variante, on pourrait prévoir des orifices s'étendant jusqu'à un bord d'extrémité et passant par un point milieu, de sorte que par rotation relative d'un élément par rapport à l'autre, on passe simplement d'une configuration autorisant le retrait du dispositif de bouchon à une configuration autorisant seulement le passage du fil en cas de rembobinage.

Avantageusement et de façon non limitative, la canne peut comprendre en outre :
- au moins un premier élément anti-rotation solidaire de l'un parmi le brin N0 (ou un brin précédent le brin N0) et le brin (NO+j), j étant supérieur ou égal à 1, s'étendant radialement et longitudinalement,
- au moins un deuxième élément anti-rotation, solidaire de l'autre parmi le brin N0 (ou un brin précédent le brin N0) et le brin (NO+j), et susceptible de venir en butée contre le premier élément anti-rotation lorsque la canne est en position complètement rétractée.

Ainsi, lorsque la canne est rétractée, le brin NO+j est limité dans sa rotation par rapport au brin N0 (ou un brin précédent), permettant ainsi d'empêcher d'emmêler le fil.

Avantageusement, on peut prévoir deux premiers éléments anti-rotation, disposés de part et d'autre du deuxième élément anti-rotation pour limiter sa course.

Les premiers et deuxième éléments anti-rotation sont dimensionnés et disposés de sorte que les premiers éléments anti-rotation limitent la course tangentielle du deuxième élément anti-rotation, sur une plage inférieure à 20°, avantageusement sur une plage inférieure à 10°.

On peut prévoir plusieurs premiers et/ou deuxièmes éléments anti-rotation.

Les éléments anti-rotation peuvent par exemple comprendre des dents imbriquées les unes dans les autres, des cannelures, un système de tige-trou, ou autre.

Dans un mode de réalisation non limitatif, le premier élément (et/ou le deuxième élément) s'étend longitudinalement sur au moins 75% de la longueur du brin au(x) il(s) est(sont) solidaire(s), avantageusement sur toute la longueur du brin. L'anti-rotation peut ainsi être assurée aussi lors du passage de la position semi-rétractée à la position complètement rétractée.

Dans le cas de deux premiers éléments de part et d'autre du deuxième élément, l'anti-rotation peut ainsi être assurée par une liaison glissière, par exemple un assemblage en queue d'aronde.

Lorsque i est strictement supérieur à un, c'est-à-dire qu'il y a un ou plusieurs brins entre le brin N0 et le brin NO+i, on peut prévoir que ce premier élément (ou le deuxième élément) s'étend longitudinalement non seulement sur au moins 75% de la longueur du brin N0, mais aussi sur une partie au moins du ou des brins entre le brin N0 et le brin NO+i.

Si le premier élément s'étend longitudinalement sur au moins 75% de la longueur du brin auquel il est solidaire, le deuxième élément peut avantageusement s'étendre longitudinalement sur une longueur bien moindre, par exemple moins du 10% de la longueur du brin, - et réciproquement. La fabrication sera ainsi facilitée.

Cette longueur moindre peut être de moins de 3 centimètres, avantageusement de l'ordre du centimètre.

Le deuxième élément, ou le cas échéant les premiers éléments, s'étendant sur une longueur moindre, peuvent être fixés ou d'une seule pièce avec un élément annulaire solidarisé (par exemple vissé ou grippé) ou d'une seule pièce avec l'entrée de plus grand diamètre du brin NO+j.

La réalisation de cet ou ces éléments anti-rotation peut ainsi être plus facile à mener, notamment dans le cas d'un élément annulaire réalisé par usinage ou moulage.

Lorsque le premier élément s'étend longitudinalement et qu'il est solidaire d'un brin tronconique, on peut prévoir que son épaisseur (ou sa profondeur) suivant la direction radiale varie avec la position longitudinale afin de rattraper la tronconicité du brin.

Cet élément annulaire peut comprendre un élément de guidage de fil fixe, solidarisé (par exemple vissé ou grippé) ou d'une seule pièce avec l'entrée de plus grand diamètre de ce brin NO+i. Cet élément de guidage de fil fixe peut être agencé pour coopérer avec l'élément de guidage de fil mobile de plus grand diamètre reçu dans ce brin NO+i, ou non.

L'un parmi le brin N0 (ou un brin précédent le brin N0) et le brin (NO+j) peut par exemple définir une rainure, avec deux surfaces de guidage dans des plans s'étendant radialement et longitudinalement, par exemple une rainure droite ou en V.

L'autre parmi le brin N0 (ou un brin précédent le brin N0) et le brin (NO+j) peut par exemple définir un tenon conformé pour être reçu dans la rainure.

Par exemple, le brin N0 (ou un brin précédent le brin N0) peut définir sur ses parois internes une rainure s'étendant longitudinalement, et l'élément annulaire solidarisé au brin NO+j peut définir une saillie de quelques centimètres de long ou moins, reçue dans cette rainure.

Selon un autre exemple, le brin N0 (ou un brin précédent le brin N0) peut définir sur ses parois internes une languette s'étendant longitudinalement, par exemple toute la longueur du brin N0 (ou du brin précédent le brin N0).

Par exemple, l'élément annulaire solidarisé au brin N0+1 peut définir une rainure de quelques centimètres de long ou moins, suffisamment profonde radialement pour recevoir une partie de la languette et débouchant longitudinalement des deux côtés et former avec la languette une liaison glissière.

Dans le cas d'un brin N0 (ou précédent), tronconique, on peut prévoir que l'épaisseur de la languette (suivant la direction radiale) varie le long de ce brin N0 ou précédent, de façon à s'adapter à la tronconicité. La coopération entre la languette et la rainure définie dans l'élément annulaire est ainsi peu affectée lorsque le brin NO+j est entrainé en mouvement par rapport à ce brin tronconique N0 ou précédent.

Avantageusement et de façon non limitative, la canne peut comprendre en outre un dispositif de rétention du brin NO+k, k variant entre 1 et 3, dans le brin N0, ledit dispositif étant agencé pour, en position complètement rétractée, résister à un effort tendant à sortir le brin NO+k du brin N0 inférieur à une valeur seuil, tout en autorisant les déplacements du fil dans la direction longitudinale du fil.

Cette valeur seuil peut être inférieure ou égale à 10 N.

Ce dispositif de rétention peut par exemple comprendre au moins une nervure s'étendant longitudinalement et radialement, solidaire par un de ses bords de l'un parmi le brin N0 (ou un brin précédent) et le brin NO+k, et conformée et disposée de sorte qu'en position complètement rétractée un bord de cette nervure opposé à ce bord de solidarisation et s'étendant longitudinalement vienne se gripper contre un élément solidaire de l'autre (ou directement l'autre) parmi le brin N0 (ou un brin précédent) et le brin NO+k.

Cette ou ces nervures peuvent ainsi délimiter des passages pour le fil, tandis que ce grippage assure la rétention du brin NO+k dans le brin N0 (ou un brin précédent).

Dans un mode de réalisation, ces nervures peuvent s'étendre radialement entre les parois externes du brin (NO+k) et les parois internes du brin N0 ou (un brin précédent).

Par exemple, le brin N0 peut être équipé de ces nervures prés de son extrémité de plus grand diamètre. Ces nervures sont fixées, par exemple par collage, sur les parois internes du brin N0 (ou un brin précédent), et lorsque le brin NO+k est reçu dans le brin N0 (ou un brin précédent), le bord intérieur de ces nervures vient frotter contre les parois externes du brin NO+k. Le fil peut passer via des conduits définis par les brins N0 et NO+k et séparés les uns des autres par les nervures.

Selon un autre exemple, les nervures peuvent être fixées, par exemple par collage ou emboîtage, sur les parois externes du brin (NO+k). Lors ce brin (NO+k) est reçu dans le brin N0 (ou un brin précédent), le bord extérieur de ces nervures vient se gripper contre le brin N0 (ou un brin précédent). Dans cet exemple, lors du passage de la position complètement rétractée à la position semi-retractée, le grippage se poursuit, mais cela peut être avantageux en ce sens que l'on peut ainsi ajuster la position du brin NO+k relativement au brin N0. Ceci peut permettre d'éviter de prévoir un ou des brins précédents le brin N0, puisque cette possibilité de réglage en longueur est ainsi offerte lors du déploiement du brin NO+k.

Dans un mode de réalisation, ces nervures peuvent s'étendre radialement entre les parois internes du brin (NO+k) et les parois externes d'un élément solidaire du brin N0 ou (un brin précédent) reçu dans le brin (NO+k).

Par exemple, les nervures peuvent être solidaires du brin NO+k et s'étendre depuis les parois internes du brin (NO+k) vers l'intérieur de la canne. On pourra ainsi prévoir un grippage contre une tige centrale solidarisée par ailleurs au brin N0 (ou à un brin précédent).

Dans un mode de réalisation avantageux, l'élément contre lequel vient se gripper la au moins une nervure, peut comprendre une tige centrale fixée ou d'une seule pièce à un élément d'extrémité fixé au brin N0 et fermant la canne.

La ou les nervure(s) peuvent être solidaire d'un élément annulaire solidarisé (par exemple vissé ou grippé) ou d'une seule pièce avec l'entrée de plus grand diamètre du brin NO+k.

En position complètement rétractée, cette tige peut être reçue dans cet élément annulaire. Les conduits sont alors définis par la tige, les parois internes de l'élément annulaire, et les nervures.

Selon un autre exemple, les nervures peuvent être solidaires de la tige et venir se gripper contre les parois internes du brin (NO+k).

Cet élément annulaire peut comprendre un élément de guidage de fil fixe, solidarisé (par exemple vissé ou grippé) ou d'une seule pièce avec l'entrée de plus grand diamètre du brin (NO+k), cet élément de guidage de fil fixe peut être agencé pour coopérer avec l'élément de guidage de fil mobile de plus grand diamètre reçu dans ce brin (NO+k).

Selon l'invention, la canne à pêche comprend pour au moins un brin dudit ensemble, cet au moins un brin étant tronconique, un jeu d'au moins trois éléments de guidage de fil dont deux au moins sont mobiles dans ledit brin tronconique, chaque élément de guidage de fil correspondant à un diamètre extérieur respectif dans la plage des diamètres intérieurs de ce brin tronconique, le jeu d'au moins trois éléments de guidage étant ordonné par diamètre extérieurs croissants lorsqu'introduit par l'extrémité de plus grand diamètre dudit brin tronconique, et chaque élément de guidage de fil comprenant un corps définissant un passage pour le fil et comprenant
- Une première partie de corps, rigide, dont le diamètre extérieur est celui dudit élément de guidage,
- Une deuxième partie de corps, plus souple que la première partie de corps.

Chaque élément de guidage de fil mobile comprenant en outre
- Une troisième partie de corps.

La deuxième partie de corps est entre la première partie de corps et la troisième partie de corps.

Le jeu est conformé de sorte que pour chaque élément de guidage à l'exception de l'élément de guidage de plus grand diamètre:
- la première partie de cet élément de guidage puisse recevoir la deuxième partie d'un élément de guidage adjacent et de plus grand diamètre, les parois externes de cette deuxième partie et les parois internes de cette première partie étant agencées pour coopérer ensemble,
- la deuxième partie de cet élément de guidage puisse recevoir sans jeu la troisième partie de l'élément de guidage adjacent et de plus grand diamètre.

Ainsi, lorsque les éléments de guidage du jeu s'emboîtent les uns dans les autres, tous les éléments de guidage du jeu, à l'exception du premier (de plus grand diamètre) et du dernier (de plus petit diamètre) voient leur deuxième partie tenue :
- d'une part, par la première partie de l'élément de guidage adjacent de plus petit diamètre, via les moyens de coopérations,
- d'autre part, par la troisième partie de l'élément de guidage adjacent de plus grand diamètre, sans jeu.

Avantageusement, le dernier élément de guidage peut être fixé à un brin reçu dans ce brin tronconique par une liaison plus forte que ces emboitements entre éléments de guidage de fil adjacents, par exemple une liaison résistant à des efforts de plus de 50 N (vissage ou collage par exemple).

Il s'est avéré que cet agencement permet, lorsqu'un élément de guidage vient se gripper à sa périphérie contre le brin tronconique dans lequel il est reçu, de détacher cet élément des autres éléments emboîtés entre eux, et non un autre élément.

Sans vouloir être liés par une théorie, il est possible que la liaison entre une deuxième partie, souple, d'un élément et la première partie, rigide, de l'élément adjacent soit renforcée par la liaison sans jeu de cette deuxième partie avec la troisième partie de l'autre élément adjacent lorsque cet autre élément est présent ; et qu'en ce qui concerne l'élément de plus grand diamètre du jeu d'élément emboîtés, l'absence de renforcement de la liaison entre sa deuxième partie et la première partie de l'élément adjacent (faute de troisième partie d'élément adjacent) rende cette liaison plus fragile que les autres, de sorte que c'est bien cet élément de plus grand diamètre qui se détache alors des autres.

A l'extrémité de plus petit diamètre du jeu d'éléments de guidage, on peut prévoir par exemple un élément dont une première et une deuxième parties coopèrent avec, respectivement, la deuxième et la troisième partie du plus petit élément mobile, cet élément d'extrémité étant par ailleurs solidarisé ou seule pièce avec un brin adjacent.

L'invention est maintenant décrite en référence aux dessins annexés, non limitatifs, dans lesquels :
La figure 1A montre un exemple de canne selon un mode de réalisation de l'invention, en position complètement rétractée.
LA figure 1B montre un exemple de canne selon ce mode de réalisation de l'invention, en position semi-rétractée.
La figure 2A est une vue d'une partie d'extrémité de plus large diamètre de cet exemple de canne lorsqu'on position rétractée.
La figure 2B est une vue d'une portion de la partie d'extrémité de plus large diamètre de cet exemple de canne lorsqu'en position rétractée.
La figure 3 est une vue d'une partie de cette canne, en position semi-rétractée.
La figure 4 est une vue d'une partie d'extrémité de plus petit diamètre de cet exemple de canne lorsqu'en position rétractée.
La figure 5 est une vue en perspective d'un exemple de dispositif de bouchon de cet exemple de canne.
La figure 6 est une vue en perspective d'un exemple de dispositif de bouchon de cet exemple de canne.
La figure 7 est une vue d'une partie d'extrémité de plus large diamètre de cet exemple de canne lorsqu'en position rétractée.
La figure 8 est une vue en perspective d'un élément d'extrémité du brin N0+1 pour cet exemple de canne.
La figure 9 est une vue en perspective d'éléments d'extrémité pour cet exemple de canne.
La figure 10 est une représentation très schématique d'un jeu d'éléments de guidage de fil reçu dans un brin tronconique d'une une canne selon un mode de réalisation de l'invention.
La figure 11 est une vue éclatée d'un exemple de jeu de quatre éléments de guidage, selon un mode de réalisation de l'invention.
La figure 12 est une vue en perspective de cet exemple de jeu d'éléments de guidage emboîtés.
La figure 13 montre des éléments de guidage ordonnés, et dont une moitié seulement est représentée, selon un mode de réalisation de l'invention.

Des références identiques seront utilisées d'une figure à l'autre pour désigner des éléments identiques ou similaires.

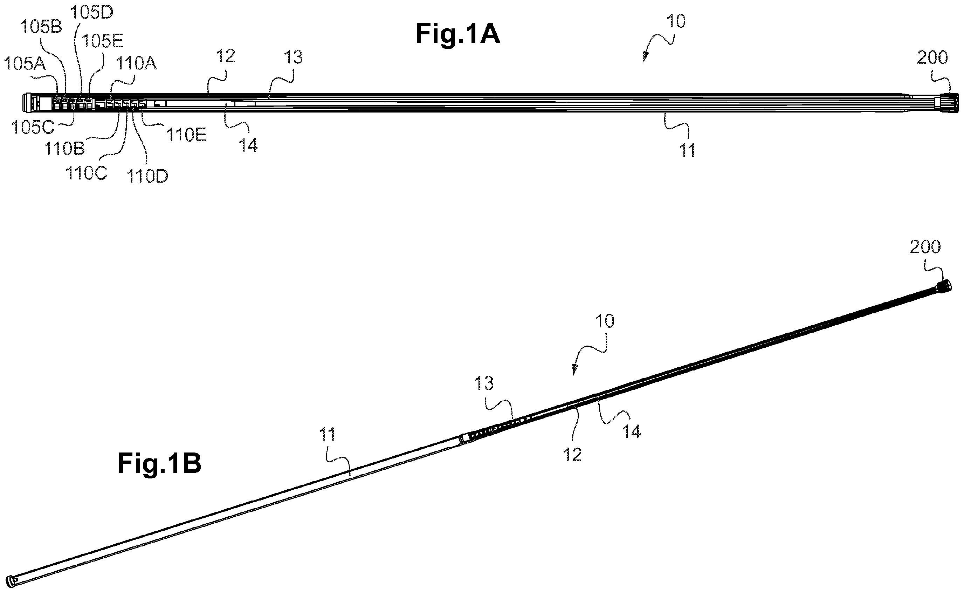

En référence à la figure 1A, une canne 10 comprend un ensemble de plusieurs brins, ici de quatre brins 11, 12, 13, 14 télescopables les uns dans les autres.

Le brin 11 dit premier brin ou brin d'entrée de fil, de plus large diamètre, est apte à recevoir le brin 12.

Le brin 14, de plus petit diamètre, ou scion, est reçu dans le brin 13.

Les brins 12, 13, dits brins intermédiaires, sont tronconiques, c'est-à-dire que leur diamètre de section varie continûment depuis une entrée de plus large diamètre jusqu'à une sortie de plus petit diamètre.

Les brins 11 et 14 peuvent être tronconiques ou non.

Le scion 14 définit des éléments de guidage de fil internes, non représentés. Ces éléments sont fixes.

Les brins intermédiaires 12,13 reçoivent des éléments de guidage de fil mobiles 105A-105E, 110A-110E, de diamètres extérieurs décroissants d'un élément à l'autre, et qui viennent se gripper les uns après les autres contre les parois internes des brins 12, 13 lorsque la canne est déployée.

La position complètement déployée n'est pas illustrée sur ces figures, mais on comprendra aisément que tous les brins sont alors déployés les uns par rapport aux autres, les éléments de guidage 105A-105E, 110A-110E se répartissant alors le long des brins 12, 13.

Un dispositif de bouchon 200 retient ensemble les brins 11-14 en position rétractée, comme illustré sur la figure 1A, et les brins 12-14 en position semi-rétractée, comme illustré sur la figure 1B.

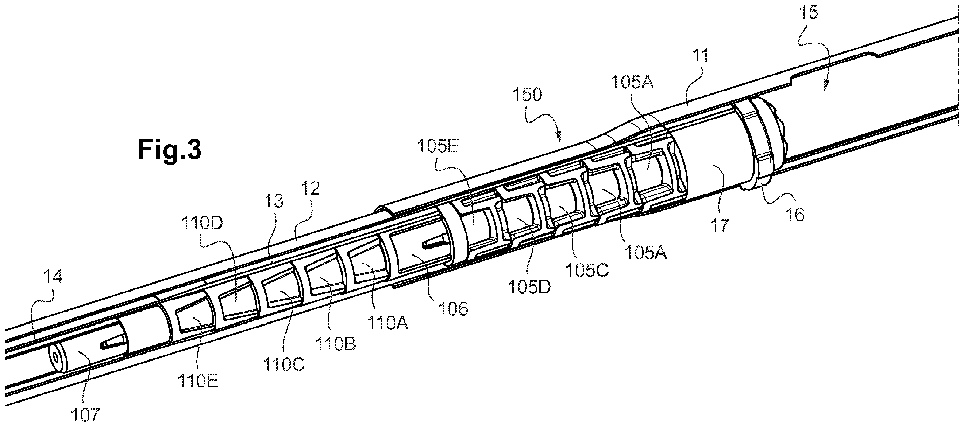

En position semi-rétractée, comme illustré sur la figure 1B et sur la figure 3, des premiers moyens de rétention 107, 110A-E, 106, 105A-E, 16 retiennent le scion 14 de façon à l'empêcher d'atteindre un passage d'entrée de fil 15 défini dans le premier brin 11, même si le scion est poussé vers cette entrée 15 avec une force raisonnable, de 10 N ou moins.

Ce passage 15 est défini dans les parois du brin 11, c'est-à-dire que le fil est introduit latéralement, et non à l'extrémité du brin 11. Ceci peut être plus confortable pour l'utilisateur, dans la mesure où une bobine (non représentée) peut être montée sur les parois de ce brin 11, ou sur un brin précédent non représenté faisant office de poignée.

A l'état semi-déployé, une portion d'emmanchement 150 du brin 11, de section plus étroite que le reste du brin 11, et dont les parois internes frottent légèrement contre les parois externes du brin 12, suffisamment pour résister à un effort de moins de 10N tendant à rétracter l'ensemble des brins 12-14 téléscopés dans le brin 11, empêche les brins 12-14 télescopés les uns dans les autres de rentrer plus avant dans le brin 11, ce qui gênerait l'introduction du fil dans le passage 15.

Les premiers moyens de rétention empêchent les brins 13, 14 de passer au travers du brin 12 et d'obturer le passage 15.

Les premiers moyens de rétention comprennent les éléments 107, 110A-E, 106, 105A-E, 16 emboîtés les uns dans les autres et qui solidarisent ainsi le brin 14 au brin 12.

Ainsi, lorsque la canne à l'état semi-rétracté est posée verticalement, le dispositif de bouchon vers le haut, la gravité n'entraine pas l'effondrement de l'ensemble des brins 12-14 dans le brin 11, ni non plus la chute des brins 13-14 dans le brin 11.

En outre, des deuxièmes moyens de rétention 200, 17, 105A-105E, 106, 110A-110E, 107 permettent d'empêcher que lorsque la canne est retournée de 180°, c'est-à-dire cette fois à la verticale (suivant la direction du vecteur gravité) avec le bouchon vers le bas, le scion 14 et le brin 13 ne sortent du brin 12 par l'extrémité de plus petit diamètre.

Ces deuxièmes moyens de rétention comprennent :
- le dispositif de bouchon 200, lequel est agencé pour maintenir ensemble les brins 12-14.
- l'ensemble des éléments 17, 105A-105E, 106, 110A-110E, 107, ces éléments coopérant entre eux à l'état semi-rétracté, et les éléments d'extrémité 17, 106 et 107 étant fixés (ou d'une seule pièce avec), à respectivement, le brin 12, le brin 13 et le scion 14. L'ensemble de ces éléments 17, 105A-105-D, 106, 110A-110F, 107 maintient ainsi le scion 14 dans le brin 12.

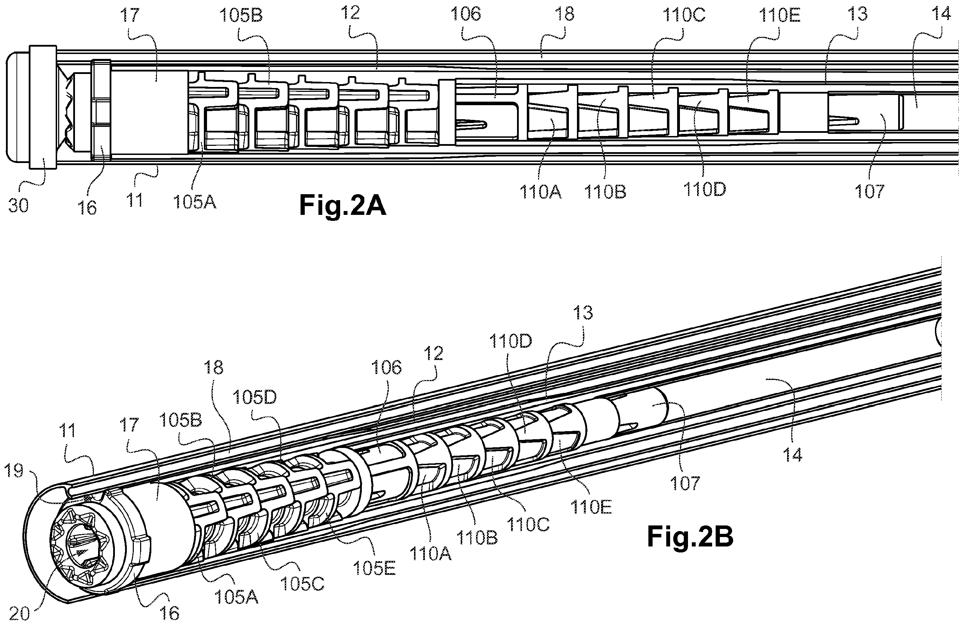

Par ailleurs, en références aux figure 2A et 2B relatives à l'état complètement rétracté, le brin 11 comporte une languette 18 s'étendant sur toute sa longueur et solidarisée ou d'une seule pièce avec le tube du brin 11. Cette languette s'étend radialement sur quelques millimètres, et coopère avec une rainure définie dans l'élément annulaire 16.

Cette rainure 19 peut être suffisamment profonde (radialement) pour pourvoir recevoir une portion de languette. La rainure 19 est débouchant longitudinalement, sur ses deux côtés, de sorte qu'elle peut coulisser sur la languette 18.

L'élément annulaire 16 est dimensionné de sorte que le brin 12 puisse être introduit dans le brin 11 seulement si la rainure 19 reçoit une portion de la languette 18. Pour un écart angulaire différent, le brin 12 ne peut être introduit dans le brin 11.

Lorsqu'après positionnement correct, on entraine en mouvement le brin 12 relativement au brin 11, cette coopération rainure 19/languette 18 se poursuit, empêchant ainsi toute rotation du brin 12 relativement au brin 11, ce qui est particulièrement utile lorsqu'un fil a été introduit via le passage 15 et une ouverture d'extrémité du brin 12. En effet, un mouvement de rotation risquerait d'emmêler le fil.

Le système languette 18/rainure 19 assure un guidage lors du passage de la position rétractée vers le position semi-rétractée ou déployée, et réciproquement, empêchant ainsi les rotations relatives du brin 12 par rapport au brin 11.

En outre, à l'état rétracté, ce système languette 18/rainure 19 empêche encore les rotations relatives du brin 12 par rapport au brin 11.

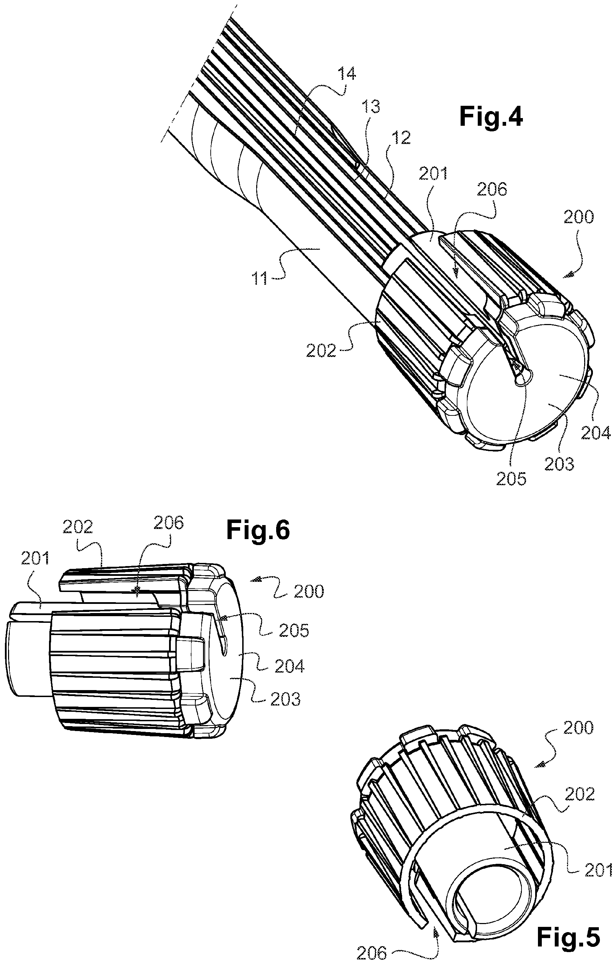

En référence aux figures 4, 5 et 6, le dispositif de bouchon 200 comprend des premiers moyens de solidarisation 201, assurant une solidarisation des brins 12-14 ensemble et des deuxièmes moyens de solidarisation 202, assurant une solidarisation des brins 11-14 ensemble.

Plus précisément, le dispositif de bouchon 200 comprend un fond 203, de forme circulaire et de diamètre suffisamment élevé pour recouvrir l'extrémité du brin 11.

Les premiers moyens de solidarisation comprennent une première paroi périphérique souple 201, formant saillie depuis le fond 203, de forme générale cylindrique avec une section circulaire de diamètre interne ou externe égale au (ou proche du) diamètre externe ou interne de l'extrémité du brin 12.

Les deuxièmes moyens de solidarisation comprennent une deuxième paroi périphérique, avantageusement souple, 202, formant saillie depuis le fond 203, de forme générale cylindrique avec une section circulaire de diamètre interne égale au (ou proche du) diamètre externe de l'extrémité du brin 11.

Ces deux parois 201, 202 sont concentriques.

La paroi 201 s'étend au-delà de la paroi 202, afin que lors du passage de la position rétractée à la position semi-rétractée, le brin 11 se désolidarise facilement du dispositif de bouchon 200, laissant les autres brins 12-14 retenus par la paroi 201.

Dans ce mode de réalisation, le fond 203 est double, c'est-à-dire qu'il comprend un premier fond 204, et un deuxième fond superposé à ce fond 204 et non visible sur les figures, et d'où partent effectivement les parois 201, 202.

Plus précisément, le dispositif de bouchon comprend un premier élément de bouchon comprenant le fond 203, et un deuxième élément de bouchon comprenant le fond non visible et les parois 201, 202.

Chaque élément de bouchon peut être d'une seule pièce.

Chaque élément de bouchon définit un orifice respectif 205, 206, traversant et permettant le passage du fil.

Les éléments de bouchons sont montés mobiles en rotation l'un par rapport à l'autre, de sorte que pour un certain écart angulaire, les deux orifices 205, 206 se recouvrent, permettant un rembobinage du fil.

Lorsque le premier élément de bouchon est entrainé en rotation jusqu'à atteindre une autre valeur d'écart angulaire, la zone de recouvrent des orifices peut devenir nulle, c'est-à-dire que le fil est alors bloqué.

On relèvera que ces orifices 205, 206 s'étendent jusqu'à des bords d'extrémité du dispositif de bouchon. Lorsque ces orifices sont alignés, la zone de recouvrement atteint donc ces bords, permettant de retirer/d'installer le dispositif de bouchon de façon relativement simple malgré la présence du fil, par un simple mouvement latéral.

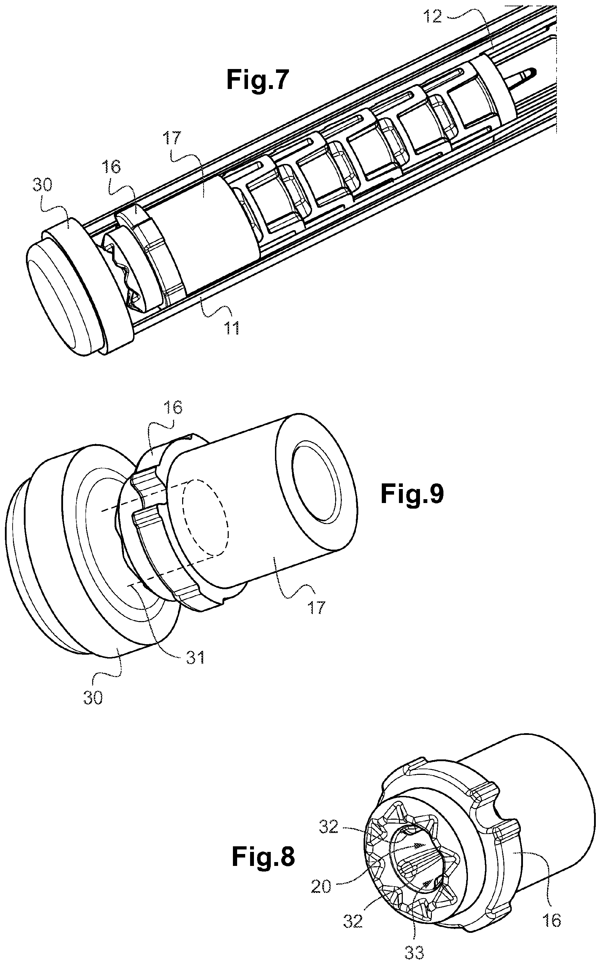

En référence aux figures 7, 8 et 9, on peut relever que cet exemple de canne comprend en outre un dispositif de rétention 16, 30 du brin 12 dans le brin 11 capable de s'opposer aux efforts induits par le fil lorsqu'on le rembobine alors que la canne est à l'état complètement replié. En effet, le fil tend alors à exercer des efforts tendant à sortir le brin 12 du brin 11.

Un élément d'extrémité 30 solidaire du brin 11, par exemple grippé ou vissé à l'extrémité de la canne comprend à cet effet une tige 31 s'étendant longitudinalement vers le scion.

L'élément annulaire 16 solidaire du brin 12, par exemple grippé ou vissé à l'extrémité du brin 12, et définissant l'ouverture 20 pour le passage du fil, définit des nervures internes 32, s'étendant radialement.

Lorsque la tige 31 est reçue dans cette ouverture, ces nervures 32 viennent se gripper contre les parois externes de la tige 31, ce qui peut suffire à s'opposer aux efforts éventuellement exercés par le fil.

Les nervures 32 définissant des canaux 33 entre les nervures 32, la tige 31 et les parois cylindriques de l'élément annulaire 16, par lesquels le fil peut passer et circuler librement.

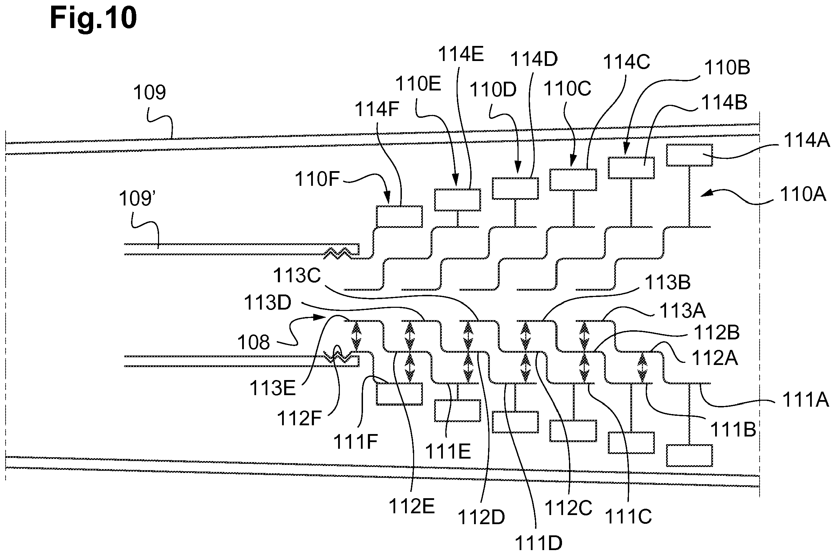

En référence à la figure 10, on a représenté schématiquement un jeu d'éléments de guidage de fil reçu dans un brin tronconique d'une une canne selon un mode de réalisation de l'invention.

Sur cette figure très schématique, la tronconicité a été exagérée, et les liaisons entre parties d'éléments sont représentées par des doubles flèches.

Dans un brin tronconique 109 est reçu un jeu d'éléments de guidage de fil 110A-110F encastrés les uns dans les autres.

Chaque élément de guidage de fil 110A-110F définit une ouverture pour le passage du fil non représenté. Lorsque ces éléments de guidage de fil sont encastrés les uns dans les autres ces ouvertures sont dans la continuité les unes des autres et forment un tunnel pour le fil.

Chaque élément de guidage de fil 110A-110F comprend un corps comprenant :
- une première partie 111A, 111B, 111C, 111D,111E, 111F rigide, destinée à venir se gripper contre les parois internes du tube 109,
- une deuxième partie 112A-112F plus souple, destinée à être reçue dans la première partie 111B-111F de l'élément suivant dans le cas des éléments mobiles 110A-110E, et destinée à être solidarisée, par exemple par vissage au brin de plus petit diamètre suivant 109' dans le cas de l'élément de guidage de fil fixe 110F.

Les éléments de guidage de fil mobiles 110A-110E comprennent en outre une troisième partie 113A-113E destinée à être reçue dans la deuxième partie 112B-112F de l'élément suivant.

Les éléments sont conformés pour que ces réceptions créent des efforts tendant à retenir les éléments emboîtés ensembles.

Plus précisément, chaque troisième partie 113A-113E est reçue sans jeu dans la deuxième partie 112B-112F de l'élément suivant.

Par « sans jeu », on entend des côtes exactes, ou un léger jeu négatif, de sorte qu'il faille forcer les éléments pour encastrer une troisième partie dans la deuxième partie de l'élément suivant.

Et chaque deuxième partie 112A-112E coopère avec la première partie 111B-111F de l'élément suivant, par exemple par clipsage, grippage, ou autre.

Ces liaisons sont représentées par des doubles flèches sur la figure.

Du fait de la souplesse de la deuxième partie, la présence d'une troisième partie vient renforcer la liaison avec la première partie correspondante.

Une portion grippante 114A-114F est solidarisée à ou d'une seule pièce avec une première partie correspondante 111A-111F.

Cette portion grippante 114A-114F définit le diamètre externe de l'élément de guidage de fil 110A-110F correspondante. Il peut par exemple s'agir d'un patin, d'une jupe, ou de la première partie elle-même (notamment pour les éléments de plus petits diamètre comme l'élément 110F sur la figure 10).

Dans un mode de réalisation avantageux, les premiers, deuxièmes et/ou troisièmes parties ont les mêmes dimensions d'un élément à l'autre, ces éléments se différentiant de part leurs portions grippantes.

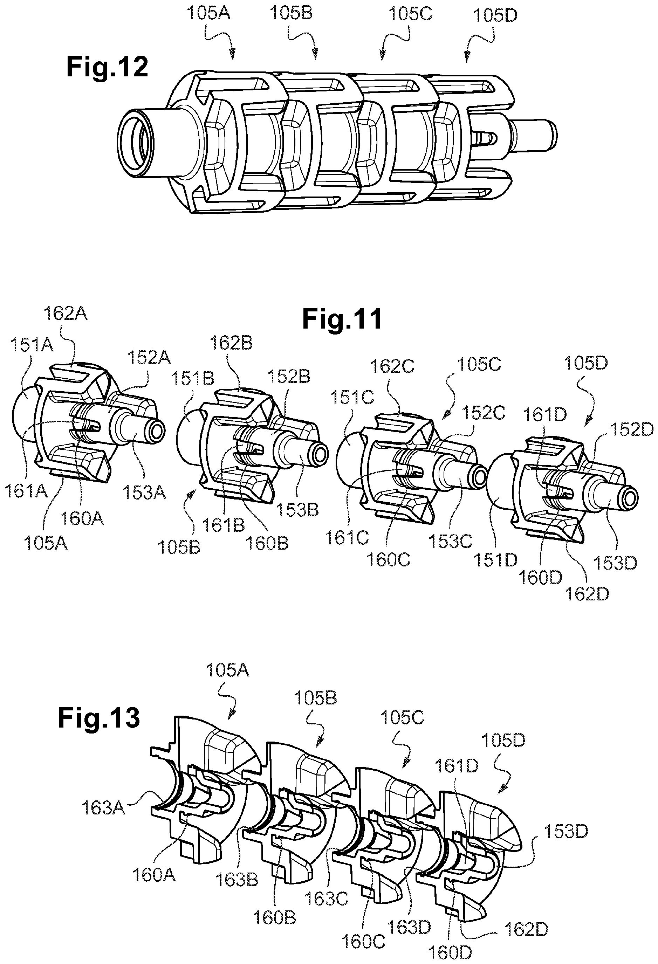

En référence aux figures 11 à 13, on a représenté des exemples d'éléments de guidage moins schématiques 105A-105D.

Chaque élément de guidage 105A-105D comprend une première partie 151A-151D, une deuxième partie plus souple 152A-152D et définissant des moyens de clipsage par exemple 160A-160D, et une troisième partie 153A-153D.

Dans cet exemple, la souplesse de la deuxième partie 152A-152D est obtenue en ajourant cette deuxième partie. Des ouvertures 161A-161D définies dans la deuxième partie 152A-152D permettent de rendre de fait ses parois plus souples.

Dans cet exemple, les moyens de clipsage comprennent des bourrelets 160A-160D destinés à coopérer avec des rainures définies dans les parois internes des premières parties. Ici les rainures 163B-163D reçoivent les bourrelets respectifs 160A-160C ; les rainures 163 A et les bourrelets 160D coopérant avec deux éléments de guidage de fil fixes respectifs non représentés.

Les portions grippantes 162A-162D sont d'une seule pièce avec le corps.

## Revendications

1. Canne à pêche comprenant :
un ensemble d'au moins trois brins (11-14) téléscopables les uns dans les autres, ledit ensemble comprenant un premier brin (11), dit brin N0, un dernier brin (14), dit scion, et un sous-ensemble de brin(s) intermédiaire(s) (12, 13) entre le premier brin et le scion, ledit sous-ensemble comprenant au moins un brin intermédiaire, le brin intermédiaire de plus grand diamètre (12) parmi ledit au moins un brin intermédiaire dudit sous-ensemble, dit (N0+1), étant susceptible d'être reçu dans le brin N0, et le brin intermédiaire de plus petit diamètre (13) parmi ledit au moins un brin intermédiaire dudit sous-ensemble étant susceptible de recevoir le scion,
dans laquelle le premier brin définit sur sa périphérie un passage d'entrée de fil (15) s'étendant suivant une direction ayant une composante radiale pour une insertion latérale du fil,
la canne étant agencée pour pouvoir passer d'une position complètement rétractée, dans laquelle tous les brins dudit ensemble sont télescopés les uns dans les autres, à une position déployée, dans laquelle tous les brins dudit ensemble sont déployés les uns par rapport aux autres, et pour pouvoir adopter en outre une position semi-rétractée, dite position d'entrée de fil, dans laquelle le brin (NO+i), i étant supérieur ou égal à 1, est déployé par rapport au brin N0 et dans laquelle le scion est reçu dans le brin (NO+i),
la canne comprenant en outre des premiers moyens de rétention (107, 110A-E, 106, 105A-E, 16) agencés pour, en position semi-rétractée, lorsque le scion est poussé vers le brin N0, venir en butée contre le scion de façon à retenir ledit scion relativement au brin (NO+i) et l'empêcher d'atteindre le passage d'entrée de fil,
des deuxièmes moyens de rétention (200, 17, 105A-105E, 106, 110A-110E, 107) pour retenir le scion dans la position semi-rétractée, lorsque soumis à des efforts de moins de 10 N tendant à l'éloigner du brin N0, à un emplacement correspondant à une mise en butée contre les premiers moyens de rétention ou à moins de 30 centimètres, d'une position de mise en butée contre les premiers moyens de rétention ;
et dans laquelle pour au moins un brin intermédiaire (12, 13 ; 109), cet au moins un brin étant tronconique, au moins trois éléments de guidage (105A-105E, 106, 110A-110E, 107 ; 110A-110F) sont reçus dans ledit brin intermédiaire tronconique, dont deux au moins (105A-105E, 110A-110E - 110A-110F) forment un jeu d'éléments de guidage de fil mobiles dans ledit brin tronconique, chaque élément dudit jeu ayant un diamètre externe compris dans la plage de diamètres internes dudit brin intermédiaire, lesdits au moins trois éléments de guidage étant ordonnés par diamètre extérieurs croissants lorsqu'introduits par l'extrémité de plus grand diamètre dudit brin tronconique, et chaque élément de guidage comprenant un corps définissant un passage (108) pour le fil, ladite canne à pêche étant **caractérisée en ce que** chacun desdits au moins trois éléments de guidage comprend
- une première partie de corps (111A-111F), rigide, dont le diamètre extérieur est celui dudit élément de guidage,
- une deuxième partie de corps (112A-112F), plus souple que la première partie de corps,
chaque élément de guidage de fil mobile (105A-105E, 110A-110E ; 110A-110F) comprenant en outre une troisième partie de corps, la deuxième partie de corps correspondante étant entre la première partie de corps correspondante et la troisième partie de corps, le jeu d'éléments de guidage de fil étant conformé de sorte que pour chaque élément de guidage à l'exception de l'élément de guidage de plus grand diamètre :
- la première partie de cet élément de guidage puisse recevoir la deuxième partie d'un élément de guidage adjacent et de plus grand diamètre, les parois externes de cette deuxième partie et les parois internes de cette première partie étant agencées pour coopérer ensemble,
- la deuxième partie de cet élément de guidage puisse recevoir sans jeu la troisième partie de l'élément de guidage adjacent et de plus grand diamètre.

2. Canne selon la revendication 1, dans laquelle les deuxièmes moyens de rétention comprennent ledit au moins un jeu d'au moins deux éléments de guidage de fil mobiles (105A-105E, 110A-110E), la canne étant agencée pour qu'en position semi-rétractée, pour au moins un brin intermédiaire (12, 13) : tous les éléments de guidage de fil mobiles (105A-105E, 110A-110E) reçus dans ledit brin intermédiaire soient solidarisés les uns aux autres, lesdites solidarisations étant amovibles, l'élément de guidage de fil mobile de plus petit diamètre (105E, 110E) soit solidarisé au brin suivant (13, 14), et l'élément de guidage de fil mobile de plus grand diamètre (105A, 110A) est solidarisé de façon amovible audit brin intermédiaire.

3. Canne selon l'une quelconque des revendications 1 à 2, dans laquelle les deuxièmes moyens de rétention comprennent un dispositif de bouchon (200) destiné à l'extrémité libre du scion (14) et agencé pour maintenir ensemble le scion et les brins jusqu'au brin NO+i (12-14) indépendamment du premier brin (11).

4. Canne selon la revendication 3, dans laquelle le dispositif de bouchon (200) est agencé pour pouvoir en outre maintenir ensemble le scion (14), le sous-ensemble de brin(s) intermédiaire(s) (12, 13) et le premier brin (11) lorsque la canne à pêche est en position rétractée.

5. Canne selon l'une des revendications 3 ou 4, dans laquelle le dispositif de bouchon (200) comprend deux éléments de bouchons mobiles l'un par rapport à l'autre en rotation autour de l'axe longitudinal de la canne lorsque le dispositif de bouchon est installé à l'extrémité de sortie de fil, chaque élément de bouchon définissant un orifice (205, 206) traversant pour le passage du fil, et le dispositif de bouchon est agencé pour que les éléments de bouchons puissent être disposés selon une première configuration, dans laquelle lesdits orifices se recouvrent au moins en partie afin que le fil puisse être rembobiné ou tiré, et également suivant une deuxième configuration dans laquelle les positions respectives des deux orifices sont différentes.

6. Canne selon l'une quelconque des revendications 1 à 5, comprenant en outre au moins un premier élément anti-rotation (18) solidaire de l'un parmi le brin N0 (ou un brin précédent le brin N0) (11) et le brin (NO+j) (12), j étant supérieur ou égal à 1, s'étendant radialement et longitudinalement, au moins un deuxième élément anti-rotation (19), solidaire de l'autre parmi le brin N0 (ou un brin précédent le brin N0) et le brin (NO+j), et susceptible de venir en butée contre le premier élément anti-rotation lorsque la canne est en position complètement rétractée.

7. Canne selon la revendication 6, dans laquelle le premier élément anti-rotation est une languette (18) s'étendant sur la paroi interne de et toute la longueur du brin N0 (ou du brin précédent le brin N0) (11), et dans laquelle le deuxième élément anti-rotation est une rainure (19) déboutant longitudinalement des deux côtés, définie dans un élément annulaire (16) à l'extrémité de plus grand diamètre du brin (NO+j) (12) et suffisamment profonde radialement pour pouvoir recevoir une portion de la languette.

8. Canne selon l'une quelconque des revendications 1 à 7, comprenant en outre au moins une nervure (32) s'étendant longitudinalement et radialement, solidaire par un de ses bords de l'un parmi le brin N0 (ou un brin précédent) (11) et un brin NO+k (12), k variant entre 1 et 3, et conformée et disposée de sorte qu'en position complètement rétractée un bord de cette nervure opposé à ce bord de solidarisation et s'étendant longitudinalement vienne se gripper contre un élément (31) solidaire de l'autre, ou directement contre l'autre, parmi le brin N0 (ou un brin précédent) et le brin NO+k, de façon à résister à un effort tendant à sortir le brin NO+k du brin N0 inférieur à une valeur seuil, tout en autorisant les déplacements du fil dans la direction longitudinale du fil.

## Patentansprüche

1. Angelrute, die Folgendes umfasst:
eine Einheit aus mindestens drei Abschnitten (11-14), die ineinander zusammenschiebbar sind, wobei die Einheit einen ersten Abschnitt (11), den sogenannten Abschnitt N0, einen letzten Abschnitt (14), die sogenannte Spitze, und eine Untereinheit aus einem oder mehreren Zwischenabschnitten (12, 13) zwischen dem ersten Abschnitt und der Spitze umfasst, wobei die Untereinheit mindestens einen Zwischenabschnitt umfasst, wobei der Zwischenabschnitt mit dem größeren Durchmesser (12) unter dem mindestens einen Zwischenabschnitt der Untereinheit, der sogenannte (N0+1), dazu geeignet ist, in dem Abschnitt N0 aufgenommen zu werden, und der Zwischenabschnitt mit dem kleineren Durchmesser (13) unter dem mindestens einen Zwischenabschnitt der Untereinheit dazu geeignet ist, die Spitze aufzunehmen,
wobei der erste Abschnitt an seinem Umfang einen Schnureingangsdurchgang (15) definiert, der sich in einer Richtung mit einer radialen Komponente zum seitlichen Einführen der Schnur folgend erstreckt,
wobei die Rute so angeordnet ist, dass sie von einer vollständig eingefahrenen Position, in der alle Abschnitte der Einheit teleskopisch ineinander geschoben sind, in eine ausgefahrene Position, in der alle Abschnitte der Einheit im Verhältnis zueinander ausgefahren sind, übergehen kann und ferner eine halb eingefahrene Position, die sogenannte Schnureingangsposition, einnehmen kann, in der der Abschnitt (NO+i), wobei i größer oder gleich 1 ist, im Verhältnis zum Abschnitt N0 ausgefahren ist und in der die Spitze im Abschnitt (NO+i) aufgenommen ist,
wobei die Rute ferner Folgendes umfasst:
erste Haltemittel (107, 110A-E, 106, 105A-E, 16), die so angeordnet sind, dass sie in der halb eingefahrenen Position, wenn die Spitze in Richtung des Abschnitts N0 gedrückt wird, derart an der Spitze zum Anliegen kommen, dass sie die Spitze in Bezug auf den Abschnitt (NO+i) festhalten und verhindern, dass diese in den Schnureingangsdurchgang gelangt,
zweite Haltemittel (200, 17, 105A-105E, 106, 110A-110E, 107), um die Spitze in der halb eingefahrenen Position zu halten, wenn sie Kräften von weniger als 10 N ausgesetzt ist, die dazu neigen, sie vom Abschnitt N0 wegzubewegen, an einer Stelle, die einem Anliegen an den ersten Haltemitteln entspricht, oder weniger als 30 Zentimeter von einer Position entfernt, an der sie an den ersten Haltemitteln anliegt;
und wobei für mindestens einen Zwischenabschnitt (12, 13; 109), wobei dieser mindestens eine Abschnitt kegelstumpfförmig ist, mindestens drei Führungselemente (105A-105E, 106, 110A-110E, 107; 110A-110F) in dem kegelstumpfförmigen Zwischenabschnitt aufgenommen sind, von denen zwei mindestens (105A-105E, 110A-110E; 110A-110F) einen Satz von Schnurführungselementen bilden, die in dem kegelstumpfförmigen Abschnitt beweglich sind, wobei jedes Element des Satzes einen Außendurchmesser aufweist, der im Bereich der Innendurchmesser des Zwischenabschnitts liegt, wobei die mindestens drei Führungselemente nach aufsteigendem Außendurchmesser geordnet sind, wenn sie an dem Ende mit dem größeren Durchmesser des kegelstrumpfförmigen Abschnitts eingeführt werden, und jedes Führungselement einen Körper umfasst, der einen Durchgang (108) für die Schnur definiert, wobei die Angelrute **dadurch gekennzeichnet ist, dass** die mindestens drei Führungselemente jeweils
- einen ersten festen Körperteil (111A-111F), dessen Außendurchmesser der des Führungselements ist,
- einen zweiten Körperteil (112A-112F), der flexibler als der erste Körperteil ist,
umfassen,
wobei jedes bewegliche Schnurführungselement (105A-105E, 110A-110E; 110A-110F) ferner einen dritten Körperteil umfasst, wobei sich der entsprechende zweite Körperteil zwischen dem ersten Körperteil und dem dritten Körperteil befindet,
wobei der Satz der Schnurführungselemente derart ausgebildet ist, dass für jedes Führungselement mit Ausnahme des Führungselements mit dem größeren Durchmesser:
- der erste Teil dieses Führungselements den zweiten Teil eines benachbarten Führungselements mit dem größeren Durchmesser aufnehmen kann, wobei die Außenwände dieses zweiten Teils und die Innenwände dieses ersten Teils so angeordnet sind, dass sie zusammenwirken,
- der zweite Teil dieses Führungselements den dritten Teil des benachbarten Führungselements mit dem größeren Durchmesser ohne Spiel aufnehmen kann.

2. Rute nach Anspruch 1, wobei die zweiten Haltemittel den mindestens einen Satz von mindestens zwei beweglichen Schnurführungselementen (105A-105E, 110A-110E) umfassen, wobei die Rute in der halb eingefahrenen Position für mindestens einen Zwischenabschnitt (12, 13) so angeordnet ist:
alle beweglichen Schnurführungselemente (105A-105E, 110A-110E), die in dem Zwischenabschnitt aufgenommen werden, sind fest miteinander verbunden, wobei die Verbindungen lösbar sind,
das bewegliche Schnurführungselement (105E, 110E) mit dem kleineren Durchmesser ist mit dem nachfolgenden Abschnitt (13, 14) fest verbunden, und
das bewegliche Schnurführungselement (105A, 110A) mit dem größeren Durchmesser ist lösbar mit dem Zwischenabschnitt fest verbunden.

3. Rute (1) nach einem der Ansprüche 1 bis 2, wobei die zweiten Haltemittel eine Verschlusskappenvorrichtung (200) umfassen, die für das freie Ende der Spitze (14) bestimmt und so angeordnet ist, dass sie die Spitze und die Abschnitte bis zum Abschnitt NO+i (12-14) unabhängig vom ersten Abschnitt (11) zusammenhält.

4. Rute nach Anspruch 3, wobei die Verschlusskappenvorrichtung (200) so angeordnet ist, dass sie ferner die Spitze (14), die Untereinheit aus der bzw. den Zwischenabschnitten (12, 13) und den ersten Abschnitt (11) zusammenhalten kann, wenn sich die Angelrute in der eingefahrenen Position befindet.

5. Rute nach einem der Ansprüche 3 oder 4, wobei die Verschlusskappenvorrichtung (200) zwei Verschlusskappenelemente umfasst, die im Verhältnis zueinander um die Längsachse der Rute drehbeweglich sind, wenn die Verschlusskappenvorrichtung am Schnurausgangsende montiert ist, wobei jedes Verschlusskappenelement eine durchgehende Öffnung (205, 206) für den Durchgang der Schnur definiert, und
die Verschlusskappenvorrichtung so angeordnet ist, dass die Verschlusskappenelemente in einer ersten Konfiguration, in der die Öffnungen mindestens teilweise deckungsgleich sind, so dass die Schnur aufgespult oder abgespult werden kann, und auch in einer zweiten Konfiguration, in der die jeweiligen Positionen der beiden Öffnungen unterschiedlich sind, angeordnet werden können.

6. Rute nach einem der Ansprüche 1 bis 5, die ferner Folgendes umfasst:
mindestens eine erste Verdrehschutzkomponente (18), die fest mit einem von dem Abschnitt N0 (oder einem den Abschnitt N0 vorhergehenden Abschnitt) (11) und dem Abschnitt (NO+j) (12) verbunden ist, wobei j größer oder gleich 1 ist, und sich radial und in Längsrichtung erstreckt,
mindestens eine zweite Verdrehschutzkomponente (19), die fest mit dem anderen von dem Abschnitt N0 (oder einem den Abschnitt N0 vorhergehenden Abschnitt) und dem Abschnitt (NO+j) verbunden und dazu geeignet ist, an der ersten Verdrehschutzkomponente zum Anliegen zu kommen, wenn sich die Rute in der vollständig eingefahrenen Position befindet.

7. Rute nach Anspruch 6, wobei die erste Verdrehschutzkomponente ein Vorsprung (18) ist, der sich entlang der Innenwand von und über die gesamte Länge des Abschnitts N0 (oder des den Abschnitt N0 vorhergehenden Abschnitts) (11) erstreckt, und wobei die zweite Verdrehschutzkomponente eine beidseitig nach außen verlaufende Nut (19) ist, die in einem Ringelement (16) am Ende mit dem größeren Durchmesser des Abschnitts (NO+j) (12) definiert und radial ausreichend tief ist, um einen Teil des Vorsprungs aufnehmen zu können.

8. Rute nach einem der Ansprüche 1 bis 7, die ferner mindestens eine Rippe (32) umfasst, die sich in Längsrichtung und radial erstreckt und mit einer ihrer Kanten mit einem von dem Abschnitt N0 (oder einem vorhergehenden Abschnitt) (11) und einem Abschnitt NO+k (12), wobei k zwischen 1 und 3 variiert, fest verbunden und so ausgebildet und angeordnet ist, dass in der vollständig eingefahrenen Position eine Kante dieser Rippe, die dieser Befestigungskante gegenüberliegt und sich in Längsrichtung erstreckt, an einem Element (31) zum Festsitzen kommt, das mit dem anderen oder direkt an dem anderen von dem Abschnitt N0 (oder einem vorhergehenden Abschnitt) und dem Abschnitt NO+k fest verbunden ist, um einer Kraft standzuhalten, die dazu neigt, den Abschnitt NO+k aus dem Abschnitt N0 herauszuziehen, und kleiner als ein Schwellenwert ist, während sie die Bewegungen der Schnur in der Längsrichtung der Schnur ermöglicht.

## Claims

1. Fishing rod comprising
an assembly of at least three sections (11-14) that can fit telescopically within each other, said assembly comprising a first section (11), called section N0, a last section (14), called a tip, and a subset of intermediate section(s) (12, 13) between the first section and the tip, said subset comprising at least one intermediate section, the intermediate section with the largest diameter (12) among said at least one intermediate section of said subset, called (N0+1), being capable of fitting within section N0, and the intermediate section with the smallest diameter (13) among said at least one intermediate section of said subset being capable of receiving the tip,
wherein
the first section defines a line input passage (15) on its periphery extending in a direction having a radial component for lateral insertion of the line,
the rod being arranged to be able to go from a fully retracted position, in which all the sections of said assembly fit telescopically within each other, to a deployed position, in which all the sections of said assembly are deployed with respect to each other, and furthermore to be able to adopt a semi-retracted position, called the line input position, in which section (NO+i), where i is equal to or greater than 1, is deployed with respect to section N0 and in which the tip is received into section (NO+i),
the rod further comprising
first retention means (107, 110A-E, 106, 105A-E, 16) arranged so as to abut, in the semi-retracted position when the tip is pushed toward section N0, against the tip in such a way as to retain the tip with respect to section (NO+i) and prevent it from reaching the line input passage,
second retention means (200, 17, 105A-105E, 106, 110A-110E, 107) to hold the tip in the semi-retracted position when subjected to forces of less than 10 N tending to move it away from section N0, in a location corresponding to an abutment against the first retention means or less than 30 centimetres, from a position of abutment against the first retention means; and wherein for at least one intermediate section (12, 13; 109), this at least one section being frustoconical, at least three guide elements (105A-105E, 106, 110A-110E, 107; 110A-110F) are received into said intermediate frustoconical section, of which at least two (105A-105E, 110A-110E; 110A-110F) form a set of line guide elements movable in said frustoconical section, each element of the set having an outside diameter within the range of inside diameters of said intermediate section, said at least three guide elements being ordered by increasing outside diameter when inserted through the larger-diameter end of said frustoconical section, and each guide element comprising a body defining a passageway (108) for the line, the said fishing rod being **characterized in that** each of the at least three guide elements comprises :
- a first rigid body part (111A-111F), the outside diameter of which is that of said guide element,
- a second body part (112A-112F) that is more flexible than the first body part,
each movable line guide element (105A-105E, 110A-110E; 110A-110F) further comprising a third body part, the second corresponding body part being between the first corresponding body part and the third body part,
the set of line guide elements being shaped so that for each guide element, with the exception of the larger-diameter guide element:
- the first part of this guide element can receive the second part of a larger-diameter adjacent guide element, the outside walls of this second part and the inside walls of this first part being arranged to cooperate with each other,
- the second part of this guide element can receive without play the second part of the larger-diameter adjacent guide element.

2. Rod according to claim 1, wherein the second retention means comprise said at least one set of at least two movable line guide element (105A-105E, 110A-110E), the rod being arranged so that in the semi-retracted position, for at least one intermediate section (12, 13):
all the movable line guide elements (105A-105E, 110A-110E) received into said intermediate section are attached to each other, said attachments being removable,
the smaller-diameter movable line guide element (105E, 110E) is attached to the next section (13, 14), and
the larger-diameter movable line guide element (105A, 110A) is removably attached to said intermediate section.

3. Rod according to one of claims 1 to 2, wherein the second retention means comprise a plugging device (200) intended for the free end of the tip (14) and arranged to keep the tip and sections up to section NO+i (12-14) together, independently of the first section (11).

4. Rod according to claim 3, wherein the plugging device (200) is further arranged to be able to hold the tip (14), the subset of intermediate section(s) (12, 13), and the first section (11) together when the fishing rod is in the retracted position.

5. Rod according to one of claims 3 or 4, wherein
the plugging device (200) comprises two movable plugging elements that can move rotationally in relation to each other about the longitudinal axis of the rod when the plugging device is installed at the line outlet end, each plugging element defining a throughhole (205, 206) for the line to pass through, and
the plugging device is arranged so that the plugging elements can be arranged according to a first configuration, in which said holes overlap at least partially so that the line can be wound up or paid out, and also according to a second configuration in which the respective positions of the two holes are different.

6. Rod according to one of claims 1 to 5, further comprising at least a first anti-rotation component (18) integral to one of either section N0 (or a section preceding section N0) and section (NO+j) (12), j being equal to or greater than 1, extending radially and longitudinally,
at least a second anti-rotation component (19), integral to the other of either section N0 (or a section preceding section N0) or section (NO+j), and capable of abutting against the first anti-rotation component when the rod is in the fully retracted position.

7. Rod according to claim 6, wherein the first anti-rotation component is a tab (18) running along the inside wall of and the entire length of section N0 (or of the section preceding section N0) (11), and wherein the second anti-rotation component is a groove (19) leading to the outside on both sides, defined in an annular element (16) at the larger-diameter end of the section (NO+j) (12) and sufficiently deep radially to be able to receive a portion of the tab.

8. Rod according to one of claims 1 to 7, further comprising at least one rib (32) extending longitudinally and radially, attached by one of the edges thereof to one of either section N0 (or a preceding section) (11) and a section NO+k (12), k varying between 1 and 3, and shaped and placed so that, when in the fully retracted position, an edge of this rib opposite this attachment edge and extending longitudinally becomes wedged against an element (31) attached to the other, or directly against the other, of either section N0 (or a preceding section) or section NO+k, so as to resist a force tending to pull section NO+k out of section N0 of less than a threshold value, while allowing the line to move in the longitudinal direction thereof.
